# EUROPEAN PATENT APPLICATION

(11) **EP 4 276 083 A1**
(43) Date of publication of application: **15.11.2023**
(21) Application number: 22290031.8
(22) Date of filing: 13.05.2022
(51) Int. Cl.: C04B 28/04

(54) **MAGNETIZABLE CONCRETE COMPOSITION**

(71) Applicant: Holcim Technology Ltd, 6300 Zug (CH)
(72) Inventor: MOULIN, Adrien, 38070 Saint-Quentin-Fallavier (FR); VERNE, Julien, 38070 Saint-Quentin-Fallavier (FR); BONNET, Emmanuel, 38070 Saint-Quentin-Fallavier (FR); BERMEJO, Edelio, 38070 Saint-Quentin-Fallavier (FR)
(74) Representative: Keschmann, Marc

(57) **Abstract**

Fresh concrete composition for producing a magnetizable concrete, comprising 250-450 kg/m³ of cement, 50-150 kg/m³ of a mineral addition, 2900-3500 kg/m³ of aggregates containing magnetizable particles, and 100-150 kg/m³ water, wherein the sand volume is ≥ 60 vol.-%.

## Description

The invention refers to a fresh concrete composition for producing a magnetizable concrete as well as to a concrete and a concrete element made from the fresh concrete composition.

Further, the invention refers to the use of concrete or a concrete element for conducting an electromagnetic field.

Magnetizable concrete may be used for inductive applications. Concrete for inductive applications can be used in combination with electric coils, to obtain for example an inductive charger. The battery of an electrically powered vehicle, such as a car, a scooter, a bus, or a fork-lift, would then charge when the vehicle is placed on the inductive charger.

Other examples of use of concrete for inductive applications include heating elements.

Magnetizable concrete compositions often comprise ferrite aggregates, which provides the material the desired electromagnetic properties.

WO 00/03404 A1 discloses a magnetizable product comprising grains made of a ferrite. Each of said grains has a minimal diameter which is substantially larger than a typical domain diameter of the ferrite. The grains are embedded in a solid matrix, which may be a solidified cement. The product is especially used for guiding an electromagnetic field having a frequency ranging from 100 kHz to 10 GHz.

WO 2017/060387 A1 discloses an arrangement for inductively supplying energy to electric or hybrid vehicles, wherein power is inductively transmitted without contact from a primary coil integrated into a roadway to a second coil located in the vehicle to be supplied. Because the primary coil is embedded in a magnetizable concrete, the magnetic field provided by the primary coil is concentrated toward the intended charging position of the secondary coil. This enables power transmission with low stray field and high efficiency.

WO 2021/93995 A1 discloses a transmitter unit and/or a receiver unit for inductive energy transmission. The transmitter unit comprises a molded body made of magnetizable concrete, which partially surrounds a primary coil. This provides an alternating magnetic field during operation, which interacts with the receiver unit. The receiver unit also comprises a molded body made of magnetizable concrete, which partially surrounds a secondary coil, which can interact with the provided alternating magnetic field. The primary coil and/or the secondary coil are formed by a waveguide and are surrounded by an electrically insulating layer. In this way, power losses due to heat and/or eddy currents can be reduced during the operation of the assembly.

US 10,770,932 B2 discloses a magnetizable concrete composite for road-embedded wireless power transfer.

EP 3862334 A1 describes a cement-based substrate for induction energy transfer systems.

One element affecting the performance of inductive chargers is the electromagnetic permeability of the concrete composition, which characterizes the capacity of a material to transmit electromagnetic energy generated by an electric coil. The higher the value, the less electromagnetic energy is lost while going through the concrete, which in turn reduces the time required to charge a battery by induction.

With the increase of electrically powered vehicles, there is a growing demand for concrete compositions that have an increased electromagnetic permeability.

Therefore, the instant invention aims at improving a concrete composition so as to increase the electromagnetic permeability and reduce energy dissipation.

In order to solve these and other objects, the invention, according to a first aspect therefore, provides a fresh concrete composition for producing a magnetizable concrete, comprising:
- cement,
- at least one mineral addition,
- aggregates, in particular sand, containing magnetizable particles, and
- water,
wherein the aggregates volume is ≥ 60 vol.-%.

As used herein, the aggregates volume is calculated as the total volume of aggregates, in particular sand, present in the concrete composition, expressed as a volume percentage of the total volume of the concrete composition. The total volume of aggregates, in particular sand, refers to the total volume of any type of aggregates, in particular sand, present in the concrete composition. Therefore, if two or more types or fractions of aggregates, in particular sand, are present in the concrete composition, the total volume of aggregates, in particular sand, corresponds to the added volumes of the two or more types or fractions.

As used herein, sand is understood to refer to a particulate material used as an aggregate in concrete that is characterized by a particle size of 0.063-10 mm, preferably 0.063-5 mm. The sand comprises particles of a magnetizable material, wherein ferrite is preferably selected as said magnetizable material. Alternatively, the magnetizable material can be a ferromagnetic metal, such as iron, cobalt or nickel.

Preferably, the aggregates, in particular sand, comprises at least 60 wt.-%, preferably at least 80 wt.-%, and even more preferably 100 wt.-% of magnetizable material.

The invention is based on the finding that a combination of specific amounts of cement, at least one mineral addition and magnetizable aggregate results in a concrete that has an increased electromagnetic permeability, if a relatively high amount of aggregates having magnetizable particles is present, as expressed by a aggregates volume of ≥ 60 vol.-%. According to a preferred embodiment of the invention, the aggregates volume is 60-70 vol.-%.

The high amount of magnetizable aggregate can also be expressed by reference to the paste volume of the fresh concrete composition. The paste volume is calculated as the total volume of cement, mineral addition, limestone filler (if present), and water, expressed as a volume percentage of the total volume of the fresh concrete composition. Preferably, the paste volume is < 40 vol.-%.

Preferably, the sum of the cement mass and the mass of the at least one mineral addition corresponds to 300-600 kg/m³.

Preferably, the concrete composition comprises:
- 250-450 kg/m³ of cement,
- 50-150 kg/m³ of at least one mineral addition,
- 2900-3500 kg/m³ of aggregates, in particular sand, containing magnetizable particles, and
- 100-200 kg/m³ water.

Preferably, the concrete composition comprises:
- 290-400 kg/m³ of cement,
- 70-110 kg/m³ of a mineral addition,
- 2900-3500 kg/m³ of aggregates, in particular sand, containing magnetizable particles, and
- 100-200 kg/m³ water.

As used herein, the amount of cement, mineral addition, aggregates, in particular sand, and water is indicated as mass (kg) per m³ of the fresh concrete composition.

In order to increase the compressive strength of the concrete after hardening, a preferred embodiment provides that the concrete composition has a water/cement ratio of ≤ 0.50, preferably 0.20-0.35. The water/cement ratio (W/C) is calculated by dividing the total mass of water by the mass of cement, excluding the mass of any mineral addition and any limestone. The mass of water is not limited to the amount of mixing water and includes any source of water, in particular water provided by liquid admixtures.

In order to provide an optimized workability of the fresh concrete mass even at a low water content, the composition may preferably comprise a water reducer, in particular a plasticizer or super-plasticizer, such as a polycarboxylate based or a polynaphthalene sulfonate based water reducer. A water reducer makes it possible to reduce the amount of mixing water for a given workability by typically 10-15% or to increase flowability for a given water/binder ratio. By way of example of water reducers, mention may be made of lignosulphonates, hydroxycarboxylic acids, carbohydrates, and other specific organic compounds, for example glycerol, polyvinyl alcohol, sodium alumino-methyl-siliconate, sulfanilic acid and casein.

Super-plasticizers belong to a new class of water reducers and are capable of reducing water contents of mixing water, for a given workability, by approximately 30% by mass. By way of example of a superplasticizer, the PCP super-plasticizers may be noted. The term "PCP" or "polyoxy polycarboxylate" is to be understood according to the present invention as a copolymer of acrylic acids or methacrylic acids and their esters of polyoxyethylene (POE).

Preferably, the fresh concrete composition comprises 25 to 40 kg per m³ of the fresh concrete composition of a water reducer, a plasticizer or a superplasticizer.

Further, various types of mineral additions may be used in the fresh concrete composition, such as silica fume, metakaolin, slag, pozzolans or mixtures thereof.

Silica fume is of particular relevance, if a high performance concrete (HPC), particularly a ultra-high performance concrete (UHPC) shall be obtained. High performance concrete generally has a compressive strength at 28 days of 50 to 100 MPa. Ultra-high performance concrete generally has a compressive strength at 28 days greater than 100 MPa and preferably greater than 120 MPa.

Silica fume, also known as micro-silica, is a by-product in the production of silicon or ferrosilicon alloys. Its main constituent is amorphous silicon dioxide. Individual particles generally have a diameter of about 5 to 10 nm. Individual particles agglomerate to form 0.1 to 1 µm agglomerates and then aggregate together into 20 to 30 µm aggregates. Silica fume generally has a BET surface area of 10-30 m²/g.

According to a preferred embodiment of the invention, the mineral addition, preferably the silica fume, has a particle size distribution characterized by a D50 of ≤ 6 µm.

Silica fume is known as a reactive pozzolanic material. Another suitable pozzolanic material is slag, used alone or in combination with silica fume. Other pozzolanic materials comprise materials rich in aluminosilicate such as metakaolin and natural pozzolans having volcanic, sedimentary or diagenetic origins.

The fresh concrete composition of the invention may also contain non-pozzolanic materials, including materials containing calcium carbonate (for example ground or precipitated), preferably a ground calcium carbonate. The ground calcium carbonate may for example be Durcal^{®} 1 or Durcal^{®} 5 (OMYA, France).

The non-pozzolanic materials preferably have a mean particle size of less than about 10 µm, preferably less than about 5 µm, for example of 1 to 4 µm. The non-pozzolanic material may be ground quartz, for example C800 which is a substantially non-pozzolanic silica filler material supplied by Sifraco, France.

The preferred specific surface area BET (determined by known methods) of the calcium carbonate or of the ground quartz is generally from 2 to 10 m²/g, generally less than 8 m²/g, for example 4 to 7 m²/g, preferably less than 6 m²/g.

Precipitated calcium carbonate is also suitable as non-pozzolanic material. The individual particles generally have a (primary) size of the order of 20 nm. The individual particles agglomerate in aggregates having a (secondary) size of approximately 0.1 to 1 µm. The aggregates themselves form clusters having a (ternary) size greater than 1 µm.

A single non-pozzolanic material or a mixture of non-pozzolanic materials may be used, for example ground calcium carbonate, ground quartz or precipitated calcium carbonate or a mixture thereof. A mixture of pozzolanic materials or a mixture of pozzolanic and non-pozzolanic materials may also be used.

According to another embodiment of the invention, the fresh concrete composition is substantially free of limestone. The term "substantially free" shall be understood to refer to a maximum amount of 0.5 wt.-% limestone based on the total weight of the fresh concrete composition.

According to a preferred embodiment, the fresh concrete composition is suitable for obtaining an ultra-high performance concrete having a compressive strength at 28 days of greater than 100 MPa. A compressive strength of greater then 100 MPa enables to reduce the thickness of the layer of concrete in use. The reduced thickness in turn increases heat dissipation, a common problem that occurs when magnetizable concrete compositions are in use in inductive applications.

In an embodiment for realizing an ultra-high performance concrete, the cement has a BET specific surface area of 1.20 to 5 m²/g, preferably 1.20 to 1.7 m²/g.

Generally speaking, the term "cement" refers to any type of hydraulic binder that sets and hardens upon the addition of water. Preferably, the hydraulic cement present in the fresh concrete composition comprises Portland cement. Alternatively, the hydraulic cement present in the fresh concrete composition consists of Portland cement, i.e. the concrete composition does not contain any hydraulic binder other than Portland cement. Preferably, a Portland cement of the type CEM I as described according to the European EN 197-1 Standard of April 2012 is used.

Other suitable cements that may be used in the invention comprise the cements of the types CEM II, CEM III, CEM IV or CEM V described according to the European EN 197-1 Standard of April 2012.

A ultra-high performance concrete is usually characterized by a lack of coarse aggregates. Therefore, the fresh concrete composition of the invention preferably is free of aggregates having a particle size of > 10 mm, preferably > 8 mm.

For realizing an ultra-high performance concrete, the sand preferably has a particle size distribution characterized by a D50 ≥ 50 µm and a D90 ≤ 4 mm.

The sand fraction of the concrete composition may be composed of two or more sub-fractions having different fineness levels. Preferably, the sand comprises a fine sand containing magnetizable particles and a coarse sand containing magnetizable particles, wherein the fine sand has a particle size distribution characterized by a D10 to a D90 of 0.063 to 1 mm and the coarse sand has a particle size distribution characterized by a D10 to a D90 of 1 to 5 mm, for example between 1 and 4 mm.

Further, the magnetizable particles my preferably have a particle size distribution characterized by a D90 of 2-4 mm and/or characterized by a D10 of 0.2-1 mm.

The high performance concrete may be reinforced by reinforcing elements, for example metal and/or organic fibers and/or glass fibers, or rebars such as steel or fiberglass rebars. Therefore, the fresh concrete composition of the invention may preferably comprise metal fibers and/or organic fibers and/or glass fibers. The quantity by volume of fibers is generally from 0.5 to 8% relative to the total volume of the fresh concrete composition. The quantity of metal fibers, expressed in terms of volume of the final hardened concrete is generally less than 3%, for example from 0.5 to 2.5%, preferably approximately 2%. The quantity of organic fibers, expressed on the same basis, is generally from 1 to 8%, preferably from 2 to 5%. The metal fibers are generally chosen from the group including steel fibers, such as high strength steel fibers, amorphous steel fibers or stainless steel fibers. The steel fibers may optionally be coated with a non-ferrous metal such as copper, zinc, nickel (or alloys thereof).

The individual length (1) of the metal fibers is generally at least 2 mm and is preferably 10 to 30 mm. The ratio 1/d (d being the diameter of the fibers) is generally from 10 to 300, preferably from 30 to 300, preferably from 30 to 100.

The organic fibers comprise polyvinyl alcohol (PVA) fibers, polyacrylonitrile (PAN) fibers, fibers of polyethylene (PE), high-density polyethylene (HDPE) fibers, polypropylene (PP) fibers, fibers of homo- or copolymers, polyamide or polyimide fibers. Mixtures of these fibers may be used. The organic reinforcing fibers used in the invention may be classified as follows: high modulus reactive fibers, low modulus nonreactive fibers and low modulus reactive fibers. The presence of organic fibers makes it possible to modify the behavior of the concrete in relation to heat or fire.

The individual length of the organic fibers is preferably from 5 to 40 mm, preferably from 6 to 12 mm. The organic fibers are preferably PVA fibers.

According to a second aspect, the invention refers to a concrete made from a fresh concrete composition according to the first aspect of the invention. The concrete is characterized by an increase electromagnetic permeability. Preferably, the concrete of the invention has an electromagnetic permeability of > 40, preferably > 50.

The concrete of the second aspect of the invention may be an ultra-high concrete having a compressive strength after 28 days of > 100 MPa. The compressive strength is measured according to standard NF P 18-470 annex C (cylinder 70mm diameter and 140mm height)

According to a third aspect, the invention refers to a concrete element made from a fresh concrete composition according to the first aspect or made of a concrete of the second aspect, wherein the concrete element has a thickness of < 170 mm, preferably < 80 mm. The concrete element may constitute a layer of a road construction or a concrete slab.

Preferably, the concrete element comprises an induction coil. Preferably, the induction coil is at least partly embedded in to concrete element.

According to a forth aspect, the invention refers to the use of a magnetizable concrete according to the second aspect or of a concrete element according to the third aspect, for conducting an electromagnetic field emanating from an induction coil that is at least partly embedded in or supported by said concrete or concrete element, respectively, and is powered by an alternating current. Thus, the magnetizable concrete may be used in applications for the inductive charging of rechargeable batteries. Inductive charging transfers energy through inductive coupling. Alternating current that passes through the induction coil creates a magnetic field, which fluctuates in strength because the electric current's amplitude. This changing magnetic field creates an alternating electric current in the receiver's induction coil, which in turn passes through a rectifier to convert it to direct current. The direct current charges a battery or provides operating power to an electrical consumer.

The invention will now be described in more detail with reference to the following exemplary embodiments.

Different fresh concrete compositions were prepared as indicated in Table 1.

**Table 1**

| Material **Type** | Description | Ex.1 | Ex.2 | Ex.3 | Ex.4 |
|---|---|---|---|---|---|
| Cement (kg/m3) | CEM I 52,5 N Le Teil | 780 | 610 | 310 | 405 |
| Silica Fume (kg/m3) | Silica fume provided by Rima | 200 | 150 | 80 | 100 |
| Limestone filler (kg/m3) | Durcal^{®} 5 | 240 | 0 | 0 | 0 |
| Sand-1 (kg/m3) | Ferrite sand 0/0,250 | 960 | 1120 | 1370 | 1284 |
| Sand-2 (kg/m3) | Ferrite sand Ferrite 5 mm | 960 | 1680 | 2050 | 1927 |
| Liquid admixture (kg/m3) | Ductal F2 - PCP based water reducing agent | 37 | 37 | 39 | 29 |
| Mixing Water (kg/m3) | - | 150 | 125 | 122 | 134 |
| W/C (wt./wt.) | | 0.22 | 0.25 | 0.48 | 0.38 |
| Paste volume (vol.-%) | | 63 | 44 | 31 | 36 |
| Sand volume (vol.%) | | 37 | 56 | 69 | 64 |
| | | | | | |
| Spread (mm) | | 260 | 220 | 170 | 220 |
| Mean compressive strength at 28 days (MPa) | | 150 | 151 | 105 | 120 |
| Electromagnetic permeability | | 13 | 23 | 54 | 40 |

The W/C ratio is calculated by dividing the total mass of water by the mass of cement (CEM I 52,5 N Le Teil in the present examples). The total amount of water is the sum of the mixing water and water from the liquid admixture Ductal F2, which is a superplasticizer supplied by Chryso having a solid content of 30 wt.-%.

The following performances were measured: spread, compressive strength, and electromagnetic permeability.

The spread value describes the capacity of the fresh concrete to flow, be pumped and placed prior to its hardening. This value is measured according to the US standard ASTM C1437, completed by C1856. A value above 150 mm is considered as suitable for the present invention.

The compressive strength is measured according to the standard NF P 18-470 annex C (cylinder 70 mm diameter and 140 mm height).

The electromagnetic permeability of the concrete is measured according to the standard IEC 62044-2:2005.

Reference example 1 is a standard high performance concrete composition where the sands are replaced with ferrite sands. Even though the strength and spread remain suitable, the electromagnetic permeability is low and not suitable for use in inductive applications.

Reference example 2 is an improved concrete composition when compared to Example 1, in which the paste volume is reduced. Even though the spread and compressive values remain suitable, the electromagnetic permeability remains too low.

When compared to reference example 1, Examples 3 and 4 have further been modified as follows:
- limestone has been removed completely from the composition,
- the paste volume is below 40 vol.-%,
- the sand volume is above 60 vol.-%, and
- W/C is above 0.40.

The compositions of Examples 3 and 4 compositions fulfill the requirements of a compressive strength being greater than 100 MPa and the electromagnetic permeability being above 40.

## Claims

1. Fresh concrete composition for producing a magnetizable concrete, comprising
- cement,
- at least one mineral addition,
- aggregates, in particular sand, containing magnetizable particles, and
- water,
wherein the aggregates volume is ≥ 60 vol.-%.

2. Fresh concrete composition according to claim 1, wherein the concrete composition comprises:
- 250-450 kg/m³ of cement,
- 50-150 kg/m³ of at least one mineral addition,
- 2900-3500 kg/m³ of aggregates, in particular sand, containing magnetizable particles, and
- 100-200 kg/m³ water,
preferably:
- 290-400 kg/m³ of cement,
- 70-110 kg/m³ of a mineral addition,
- 2900-3500 kg/m³ of aggregates, in particular sand, containing magnetizable particles, and
- 100-200 kg/m³ water.

3. Fresh concrete composition according to claim 1 or 2, wherein the sand comprises at least 60 wt.-%, preferably at least 80 wt.-%, and even more preferably 100 wt.-% of magnetizable material.

4. Fresh concrete composition according to claim 1, 2 or 3, wherein the sand volume is 60-70 vol.-%.

5. Fresh concrete composition according to any one of claims 1 to 4, wherein the concrete composition has a water/cement ratio W/C of ≤ 0.50, preferably 0.20-0.35.

6. Fresh concrete composition according to any one of claims 1 to 5, wherein the magnetizable particles consist of ferrite.

7. Fresh concrete composition according to any one of claims 1 to 6, wherein the mineral addition comprises or consists of silica fume, metakaolin, slag, pozzolans or mixtures thereof.

8. Fresh concrete composition according to any one of claims 1 to 7, wherein the cement has a BET specific surface area of 1.20 to 5 m²/g, preferably 1.20 to 1.7 m²/g.

9. Fresh concrete composition according to any one of claims 1 to 8, wherein the mineral addition, preferably the silica fume, has a particle size distribution **characterized by** a D50 of ≤ 6 µm.

10. Fresh concrete composition according to any one of claims 1 to 9, wherein the sand has a particle size distribution **characterized by** a D50 ≥ 50 µm and a D90 ≤ 4 mm.

11. Fresh concrete composition according to any one of claims 1 to 10, wherein the concrete composition is free of aggregates having a particle size of > 10 mm, preferably > 8 mm.

12. Fresh concrete composition according to any one of claims 1 to 11, wherein the sand comprises a fine sand containing magnetizable particles and a coarse sand containing magnetizable particles, wherein the fine sand has a particle size distribution **characterized by** a D10 to a D90 of 0.063 to 1 mm and the coarse sand has a particle size distribution **characterized by** a D10 to a D90 of 1 to 5 mm, for example between 1 and 4 mm.

13. Fresh concrete composition according to any one of claims 1 to 12, wherein the concrete composition is substantially free of limestone.

14. Fresh concrete composition according to any one of claims 1 to 13, wherein the magnetizable particles have a particle size distribution **characterized by** a D90 of 2-4 mm.

15. Fresh concrete composition according to any one of claims 1 to 14, wherein the magnetizable particles have particle size distribution **characterized by** a D10 of 0.2-1 mm.

16. Method of producing a magnetizable concrete, comprising preparing a fresh concrete composition according to any one of claims 1 to 15 by mixing its constituents, casting the fresh concrete and allowing it to set and harden.

17. Concrete made from a fresh concrete composition according to any one of claims 1 to 15, in particular by means of a method according to claim 16.

18. Concrete according to claim 17, having a compressive strength after 28 days of > 100 MPa.

19. Concrete according to claim 17 or 18, having an electromagnetic permeability of > 40, preferably > 50 measured according to the standard IEC 62044-2:2005.

20. Concrete element made from a fresh concrete composition according to any one of claims 1 to 15 or made of a concrete according to any one of claim 17 to 19, wherein the concrete element has a thickness of < 170 mm, preferably < 80 mm.

21. Use of a magnetizable concrete according to any one of claims 17 to 19, or of a concrete element according to claim 20, for conducting an electromagnetic field emanating from an induction coil that is at least partly embedded in or supported by said concrete or concrete element, respectively, and is powered by an alternating current.
